# EUROPEAN PATENT SPECIFICATION

(11) **EP 2 295 291 B1**
(45) Date of publication and mention of the grant of the patent: **06.04.2016**
(21) Application number: 10174241.9
(22) Date of filing: 27.08.2010
(51) Int. Cl.: B60Q 1/14, F21V 14/08, F21S 8/10

(54) **Vehicle headlight device**
Fahrzeug-Scheinwerfervorrichtung
Dispositif de phare de véhicule

(30) Priority: 15.09.2009 JP 2009213586
(43) Date of publication of application: 16.03.2011
(73) Proprietor: Koito Manufacturing Co., Ltd., Tokyo 108-8711 (JP)
(72) Inventor: Mochizuki, Kiyotaka, Shimizu-shi Shizuoka (JP)
(74) Representative: Grünecker Patent- und Rechtsanwälte PartG mbB

(56) References cited:
- EP-A2- 1 104 869
- EP-A2- 2 036 770
- EP-A2- 2 103 868
- WO-A1-2009/104115
- DE-A1-102008 001 094
- JP-A- 7 029 403
- US-A- 5 645 338
- US-A1- 2009 154 187

## Description

### BACKGROUND OF THE INVENTION

### Technical Field

The present invention relates to a vehicle headlight device, and more particularly, to a vehicle headlight device that is used in an automobile and the like.

### Related Art

A vehicle headlight device generally can switch between a low beam and a high beam. The low beam illuminates a region near a vehicle at a predetermined illuminance so as not to direct glare at forward vehicles that includes oncoming vehicles or preceding vehicles, and is usually used when a vehicle travels in urban areas. Meanwhile, the high beam illuminates a wide range on the front side of a vehicle and a distance at a relatively high illuminance, and is usually used when a vehicle travels at a high speed on a road where few forward vehicles exist.

The high beam is superior to the low beam in terms of a driver's visibility, but has a problem in that glare is directed at drivers of other vehicles. Accordingly, when a vehicle travels in urban areas in the nighttime in particular, the low beam is often used. When the low beam is used, the light source for the high beam is not used. Meanwhile, there always is a demand for an improvement of visibility on the road for the driver when a low beam is used.

JP-A-1-244934 discloses a vehicle headlight device. The vehicle headlight device includes plate-like stationary shades and triangular movable shades that are rotatably supported at corners of the stationary shades. The vehicle headlight device changes an irradiation region corresponding to a traveling lane by displacing the movable shades in accordance with a vehicle speed and a steering angle and making a headlight unit swivel. Due to the above-mentioned structure, the vehicle headlight device reliably blocks light on an opposite lane, emits a beam similar to the low beam while a vehicle travels, and emits a beam similar to the high beam, which does not block light as much as possible, when a vehicle travels on a straight road as well as is turning left and right on a curved road.

In the above-mentioned first embodiment, the visibility on the traveling lane has been improved in accordance with the shape of the traveling road. There is a demand for the improvement of a driver's visibility even on the opposite lane. When a beam similar to a high beam is used on the opposite lane for the improvement of visibility on the opposite lane, the glare needs to be considered so as not to be directed at oncoming vehicles. In contrast, there is considered a method of making a lamp swivel in accordance with the presence of an oncoming vehicle while forming a so-called right-side high light distribution pattern. The right-side high light distribution pattern includes a light blocking region on the traveling lane of a high beam when vehicles or pedestrians keep to one side, and illuminates only the opposite lane with a high beam. In this method, it may be possible to superimpose a light blocking region, which is positioned on the traveling lane at an initial position, on the presence region of an oncoming vehicle by making the lamp swivel. According to this, it may be possible to improve the driver's visibility on the opposite lane while preventing glare from being directed at the oncoming vehicle.

However, by this method, it may be possible to displace the light blocking region, which is positioned on the traveling lane, toward the opposite lane by making the lamp swivel. For this reason, a boundary between the brightness and darkness of the light blocking region and the irradiation region of the right-side high light distribution pattern moves a driver's gaze region, which is positioned substantially in the middle when a vehicle travels on a straight road, in the horizontal direction. As a result, the change of the brightness and darkness in the driver's gaze region is increased, so that there has been a concern that a driver feels discomfort.

EP 2 036 770 A2 relates to a vehicle lamp and WO 2009/104115 A1 relates to an automotive front lighting system with adaptive arc shaping.

### SUMMARY OF THE INVENTION

It is an illustrative aspect of the present invention to provide a technique that reduces the possibility of a driver feeling discomfort when a light distribution pattern is changed in accordance with the presence of a forward vehicle.

According to one or more aspects of the present invention, there is provided a headlight device for a vehicle including features of claim 1.

According to one or more aspects of the present invention, there is provided a headlight device for a vehicle, including features of claim 1.

According to this aspect, when a light distribution pattern is changed in accordance with the presence of the forward vehicle, it may be possible to reduce the possibility that a driver feels discomfort.

According to one or more aspects of the invention, each of the first and second unit includes: a light source that irradiates a front region in front of the vehicle with light; and a rotary shade that blocks a part of the light emitted from the light source and forms at least one of the additional light distribution patterns, wherein the at least one of the additional light distribution patterns is formed based on a rotational position of the rotary shade.

According to this aspect, it may be possible to form the plurality of additional light distribution patterns within a small space.

According to one or more aspects of the invention, the controller gradually changes the inclination angle of the first and second oblique cutoff lines by switching between the plurality of additional light distribution patterns.

According to this aspect, when a light distribution pattern is changed in accordance with the presence of the forward vehicle, it may also be possible to reduce the possibility that a driver feels discomfort.

According to one or more aspects of the invention, positions of ends of the first and second oblique cutoff lines are different from one another in the vehicle width directions, and the controller gradually changes the position of the end of the first and second oblique cutoff lines in the vehicle width direction by switching between the plurality of additional light distribution patterns.

According to this aspect, it may be possible to more reliably prevent glare from being directed at a forward vehicle while reducing the driver's discomfort.

According to one or more aspects of the invention, clarity of the oblique cutoff line in a center region is greater than clarity of the oblique cutoff line in an outer region other than the center region.

According to this aspect, it may be possible to prevent glare from being directed at the forward vehicle at the center regions of the additional light distribution patterns and to reduce the driver's discomfort at the outer regions of the additional light distribution patterns.

Other aspects and advantages of the present invention will be apparent from the following description, the drawings and the claims.

### BRIEF DESCRIPTION OF THE DRAWINGS

Fig. 1 is a schematic vertical cross-sectional view illustrating the internal structure of a vehicle headlight device according to a first embodiment of the invention;
Fig. 2 is a schematic perspective view of a rotary shade;
Fig. 3 is a functional block diagram illustrating an operational interaction between an irradiation controller of a headlight unit and a vehicle controller provided in a vehicle;
Figs. 4A to 4E are views showing the shapes of light distribution patterns that are formed by a left headlight unit;
Figs. 4F to 4J are views showing the shapes of the light distribution patterns that are formed by a right headlight unit;
Figs. 5A to 5E are views illustrating a relationship between a forward vehicle and a light distribution pattern;
Fig. 6 is a control flow chart of the formation of a light distribution pattern that is performed by a vehicle headlight device according to the first embodiment;
Figs. 7A and 7B are views showing the change of an irradiation region that is caused by the switching of a light distribution pattern;
Figs. 8A and 8B are schematic perspective views of a rotary shade of a vehicle headlight device according to a second embodiment of the invention;
Figs. 9A to 9C are views illustrating a relationship between the position of the rotary shade and the shape of a light distribution pattern; and
Figs. 10A to 10C are views illustrating a relationship between the position of the rotary shade and the shape of a light distribution pattern.

### DETAILED DESCRIPTION OF EXEMPLARY EMBODIMENTS

Exemplary embodiments of the invention will be described below with reference to the drawings. The same or equivalent components, members, and processes, which are shown in the respective drawings, are denoted by the same reference numerals, and the repeated description will be appropriately omitted. Further, embodiments do not limit the invention, and are illustrative. All the characteristics or combinations described in the embodiments are not necessarily essential in the invention.

### (First embodiment)

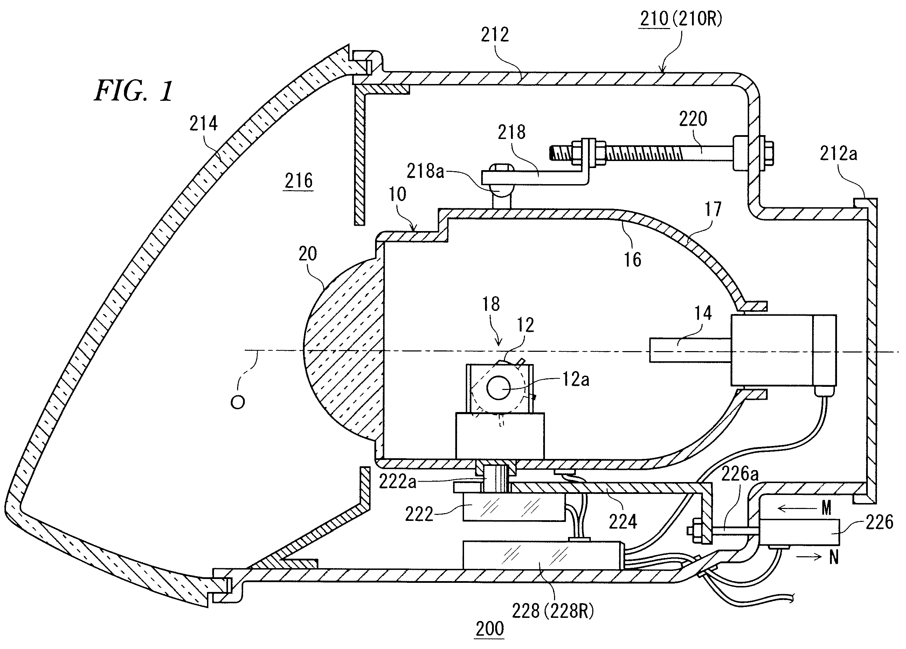

Fig. 1 is a schematic vertical cross-sectional view illustrating the internal structure of a vehicle headlight device according to a first embodiment of the invention. A vehicle headlight device 200 according to this embodiment includes a headlight unit 210L that is disposed at a left end portion of a vehicle in a vehicle width direction, and a headlight unit 210R that is disposed at a right end portion thereof (hereinafter, each of the headlight unit 210L and the headlight unit 210R is appropriately and collectively referred to as a "headlight unit 210"). Each of the headlight units 210L and 210R of this embodiment is a so-called adaptive front-lighting system (AFS) that forms a low beam light distribution pattern or an additional light distribution pattern to be described below by blocking a part of a beam emitted from, for example, one light source and forms a high beam light distribution pattern when not blocking the beam. The headlight units 210L and 210R have substantially the same structure except for the symmetrical structure. Accordingly, the structure of the right headlight unit 210R will be described below, and the description of the left headlight unit will be appropriately omitted. Meanwhile, when being described, the respective members of the headlight unit 210L are denoted by the same reference numerals as those of corresponding members of the headlight unit 210R for convenience of the description. Further, when the reference numeral of each member of the headlight unit 210R includes an "R" at the end thereof, the "R" is replaced with "L" as for the headlight unit 210L.

The headlight unit 210R includes a lamp body 212 and a translucent cover 214. The lamp body 212 includes an opening that is formed at a front portion of the lamp body on the front side of the vehicle, and a detachable cover 212a that is provided at a rear portion of the lamp body and is separated at the time of replacement of a bulb 14. Further, the transparent cover 214 is connected to the opening formed at the front portion of the lamp body 212, so that a lamp chamber 216 is formed. A lamp unit 10, which irradiates the front side of the vehicle with light, is received in the lamp chamber 216. A lamp bracket 218 includes a pivot mechanism 218a serving as a swiveling center of the lamp unit 10, and is formed at a part of the lamp unit 10. The lamp bracket 218 is threadedly engaged with aiming adjustment screws 220 that are rotatably supported on the wall surface of the lamp body 212. Accordingly, the lamp unit 10 is supported at a predetermined position, which is determined by the adjustment of the aiming adjustment screws 220, in the lamp chamber 216 while being tiltable.

Furthermore, a rotating shaft 222a of a swivel actuator 222 (that forms an adaptive front-lighting system (AFS) for a curved road, which illuminates in a traveling direction while a vehicle travels on a curved road) is fixed to the lower surface of the lamp unit 10. The swivel actuator 222 makes the lamp unit 10 swivel about the pivot mechanism 218a in the traveling direction on the basis of the steering angle data provided from the vehicle, the shape data of a traveling road provided from a navigation system, and a relative positional relationship between a vehicle and a forward vehicle that includes an oncoming vehicle and a preceding vehicle. As a result, the irradiation region of the lamp unit 10 faces not merely the front side of the vehicle but follows the curves of the road, so that the driver's forward visibility is improved. The swivel actuator 222 may be formed of, for example, a stepping motor. Meanwhile, if a swivel angle has a fixed value, a solenoid or the like may be used as the swivel actuator.

The swivel actuator 222 is fixed to a unit bracket 224. A leveling actuator 226, which is disposed outside the lamp body 212, is connected to the unit bracket 224. For example, the leveling actuator 226 is formed of a motor or the like that pushes and pulls a rod 226a in the directions of arrows M and N. When the rod 226a is pushed in the direction of the arrow M, the lamp unit 10 swivels about the pivot mechanism 218a to be in a backward inclined posture. In contrast, when the rod 226a is pulled in the direction of the arrow N, the lamp unit 10 swivels about the pivot mechanism 218a to be in a forward inclined posture. When the lamp unit 10 is in the backward inclined posture, it may be possible to perform a leveling adjustment for making the optical axis be direct at the upper side. Further, when the lamp unit 10 is in the forward inclined posture, it may be possible to perform a leveling adjustment for making the optical axis be directed at the lower side. It may be possible to adjust the optical axis in accordance with the posture of the vehicle by performing the leveling adjustment as described above. As a result, it may be possible to adjust the range of light, which is emitted toward the front side by the headlight unit 210, to an optimum distance.

The leveling adjustment may be performed in accordance with the posture of a vehicle that is traveling. For example, when a vehicle is accelerating, the posture of the vehicle is inclined backwards. In contrast, when a vehicle is decelerating, the posture of the vehicle is inclined forwards. Accordingly, the irradiation direction of the headlight unit 210 also changes in a vertical direction in accordance with the posture of the vehicle, and forward irradiation distance increases or decreases. Further, it may be possible to optimally adjust the range of light, which is emitted toward the front side, even while the vehicle is traveling by performing the leveling adjustment of the lamp unit 10 in real time on the basis of the posture of the vehicle. This may be referred to as "auto-leveling".

An irradiation controller 228 (controller), which controls the turning-on/off of the lamp unit 10 or controls the formation of a light distribution pattern, is disposed on the inner wall surface of the lamp chamber 216 at a position below the lamp unit 10. In the case of Fig. 1, an irradiation controller 228R for controlling the headlight unit 210R is disposed. The irradiation controller 228R also controls the swivel actuator 222, the leveling actuator 226, and the like. Meanwhile, the headlight unit 210L may include a dedicated irradiation controller 228L. Alternatively, the irradiation controller 228R provided in the headlight unit 210R may collectively control the respective actuators of the headlight units 210R and 210L or collectively control the formation of the light distribution patterns.

The lamp unit 10 may include an aiming adjustment mechanism. For example, an aiming pivot mechanism (not shown), which functions as a swiveling center during aiming adjustment, is disposed at a connection portion between the unit bracket 224 and the rod 226a of the leveling actuator 226. Further, the above-mentioned aiming adjustment screws 220 are disposed at the lamp bracket 218 at an interval in the vehicle width direction. For example, when the two aiming adjustment screws 220 are rotated in a counterclockwise direction, the lamp unit 10 swivels about the aiming pivot mechanism so as to be in the forward inclined posture. Accordingly, an optical axis is adjusted so as to be directed at the lower side. Likewise, when the two aiming adjustment screws 220 are rotated in a clockwise direction, the lamp unit 10 swivels about the aiming pivot mechanism so as to be in the backward inclined posture. Accordingly, an optical axis is adjusted so as to be directed at the upper side. Furthermore, when the aiming adjustment screw 220, which is disposed on the left side in the vehicle width direction, is rotated in the counterclockwise direction, the lamp unit 10 swivels about the aiming pivot mechanism so as to be in the right swivel posture. Accordingly, an optical axis is adjusted so as to be directed at the right side. Moreover, when the aiming adjustment screw 220, which is disposed on the right side in the vehicle width direction, is rotated in the counterclockwise direction, the lamp unit 10 swivels about the aiming pivot mechanism so as to be in a left swivel posture. Accordingly, an optical axis is adjusted so as to be directed at the left side. This aiming adjustment is performed at the time of the shipment of vehicles, the detection of vehicles, or the replacement of the headlight unit 210. Further, the headlight unit 210 is adjusted to a posture that is prescribed in design, and the formation of the light distribution pattern of this embodiment is controlled on the basis of this posture.

The lamp unit 10 includes a shade mechanism 18 that is provided with a rotary shade 12 (which may also be referred to as a variable shade) including a rotating shaft 12a, a bulb 14 as a light source, a lamp housing 17 that supports a reflector 16 on an inner wall thereof, and a projection lens 20. For example, an incandescent bulb, a halogen lamp, a discharge bulb, an LED, or the like may be used as the bulb 14. In this embodiment, the bulb 14 formed of a halogen lamp is shown as an example.

At least a part of the reflector 16 is formed in an elliptical shape, and the elliptical surface of the reflector is set so that the shape of the cross-section of the reflector, which includes an optical axis O of the lamp unit 10, becomes at least a part of an elliptical shape. The elliptical portion of the reflector 16 has a first focus substantially at the center of the bulb 14, and has a second focus on a rear focal plane that includes a rear focus of the projection lens 20. A part of the light emitted from the bulb 14 is directly guided to the projection lens 20 through the rotary shade 12, or the light emitted from the bulb is reflected by the reflector 16 and guided to the projection lens through the rotary shade.

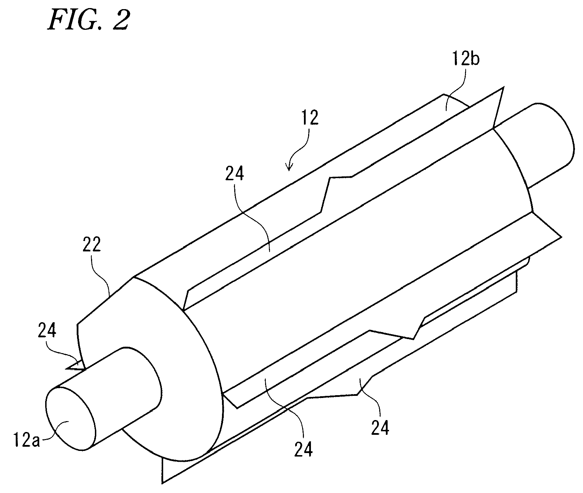

Fig. 2 is a schematic perspective view of the rotary shade. The rotary shade 12 is a cylindrical member that is rotatable about the rotating shaft 12a. Moreover, the rotary shade 12 includes a cutout portion 22 that is formed by cutting a part of the rotary shade in an axial direction, and holds a plurality of plate-like shade plates 24 on an outer peripheral surface 12b except for the cutout portion 22. The rotary shade 12 may move one of the cutout portion 22 and the shade plates 24 to a position, which is positioned on the rear focal plane of the projection lens 20 and on the optical axis O, in accordance with the rotation angle thereof. When one of the shade plates 24 is moved onto the optical axis O, a part of the light emitted from the bulb 14 is blocked by the shade plate 24 positioned on the optical axis O. Accordingly, there is formed a low beam light distribution pattern or an additional light distribution pattern that partially has the characteristics of a high beam light distribution pattern. Further, when the cutout portion 22 is moved onto the optical axis O, the light emitted from the bulb 14 is not blocked. Accordingly, there is formed a high beam light distribution pattern. Meanwhile, in the vehicle headlight device 200 according to this embodiment, the shape of the shade plate 24 of the lamp unit 10 (second lamp unit) of the headlight unit 210L is different from that of the shade plate of the lamp unit 10 (first lamp unit) of the headlight unit 210R. Accordingly, the lamp units 10 of the headlight units 210L and 210R can form different light distribution patterns. Light distribution patterns formed by the headlight unit 210 will be described in detail below.

The rotary shade 12 may be rotated by the driving of, for example, a motor. Accordingly, the rotary shade can move the cutout portion 22 or the shade plates 24, which are used to form a desired light distribution pattern, onto the optical axis O by the control of the rotation angle of the motor. Meanwhile, the cutout portion 22 formed on the outer peripheral surface 12b of the rotary shade 12 may be omitted so that the rotary shade 12 has only a function of blocking light. Further, in order to form a high beam light distribution pattern, the rotary shade 12 may be made to retreat from the position of the optical axis O by the driving of, for example, a solenoid or the like. In this case, since the rotary shade 12 does not include the cutout portion 22, a low beam light distribution pattern or a light distribution pattern similar to the low beam light distribution pattern is fixed even though, for example, a motor for rotating the rotary shade 12 fails. That is, a fail-safe function is achieved making it possible to reliably avoid that the rotary shade 12 being fixed in a posture where a high beam light distribution pattern is formed.

The projection lens 20 is disposed on the optical axis O extending in the longitudinal direction of the vehicle, and the bulb 14 is disposed on the rear side of a rear focal plane of the projection lens 20. The projection lens 20 is a plano-convex aspheric lens of which the front surface is a convex surface and the rear surface is a flat surface. The projection lens projects a light source image, which is formed on the rear focal plane, onto a virtual vertical screen, which is formed on the front side of the vehicle headlight device 200, as an inverted image.

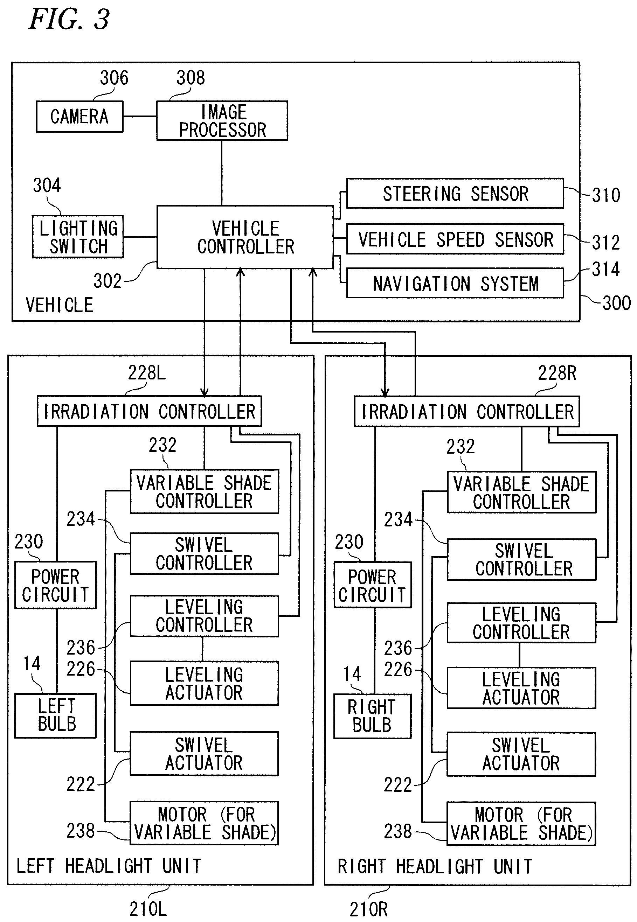

Fig. 3 is a functional block diagram illustrating an operational interaction between the irradiation controller of the headlight unit having the above-mentioned structure and a vehicle controller provided in the vehicle. Meanwhile, since the structure of the left headlight unit 210L is basically the same as that of the right headlight unit 210R as described above, only the headlight unit 210R will be described and the description of the headlight unit 210L will be omitted.

The irradiation controller 228R of the headlight unit 210R controls the turning-on/off of the bulb 14 by controlling a power circuit 230 on the basis of the information obtained from the vehicle controller 302 mounted on the vehicle 300. Furthermore, the irradiation controller 228R controls a variable shade controller 232, a swivel controller 234, and a leveling controller 236 on the basis of the information obtained from the vehicle controller 302. The variable shade controller 232 moves a desired shade plate 24 or the cutout portion 22 onto the optical axis O by controlling the driving of a motor 238 that is connected to the rotating shaft 12a of the rotary shade 12 through a gear mechanism. Meanwhile, rotation information, which represents the rotational state of the rotary shade 12 and is obtained from a detection sensor such as an encoder provided on the motor 238 or the rotary shade 12, is provided to the variable shade controller 232; and accurate rotation control is achieved by feedback control.

The swivel controller 234 adjusts the optical axis of the lamp unit 10 in the vehicle width direction by controlling the swivel actuator 222. For example, when a vehicle travels on a curved road or turns right or left, the swivel controller causes the optical axis of the lamp unit 10 to be directed at the traveling direction where the vehicle is to travel. Further, the leveling controller 236 adjusts the optical axis of the lamp unit 10 in the vertical direction of the vehicle by controlling the leveling actuator 226. For example, the leveling controller adjusts the range of light, which is emitted toward the front side, to an optimum distance by adjusting the posture of the lamp unit 10 in accordance with the forward or backward inclination of the vehicle posture during acceleration or deceleration. The vehicle controller 302 provides the same information even to the headlight unit 210L, and the irradiation controller 228L (controller) provided in the headlight unit 210L performs the same control as the control of the irradiation controller 228R.

In this embodiment, the light distribution patterns formed by the headlight units 210L and 210R may be switched in accordance with the operation of a lighting switch 304 that is performed by a driver. In this case, the irradiation controllers 228L and 228R form a desired light distribution pattern by driving the motors 238 through the variable shade controllers 232 in accordance with the operation of the lighting switch 304.

Further, the headlight units 210L and 210R of this embodiment may be automatically controlled so as to form optimum light distribution patterns corresponding to the circumstances around the vehicle, which are detected by various sensors, without the operation of the lighting switch 304. For example, when it may be possible to detect that preceding vehicles, oncoming vehicles, pedestrians, or the like exist in front of a vehicle, the irradiation controllers 228L and 228R determine that glare should be prevented on basis of the information obtained from the vehicle controller 302. Then, the irradiation controllers may form low beam light distribution patterns. Further, if it may be possible to detect whether or not preceding vehicles, oncoming vehicles, pedestrians, or the like do not exist in front of a vehicle, the irradiation controllers 228L and 228R determine that the driver's visibility should be improved. Then, the irradiation controllers form high beam light distribution patterns where light is not blocked by the rotary shade 12. Furthermore, when an additional light distribution pattern to be described below may be formed in addition to the low beam light distribution pattern and the high beam light distribution pattern, the irradiation controllers may form optimum light distribution patterns, which consider the forward vehicle, in accordance with the presence of a forward vehicle. This control mode may be referred to as an ADB (Adaptive Driving Beam) mode.

A camera 306, such as a stereo camera, as means for recognizing an object is connected to the vehicle controller 302 in order to detect objects, such as preceding vehicles or oncoming vehicles. The image frame data of an image captured by the camera 306 is subjected to predetermined image processing such as object recognition in an image processor 308, and is provided to the vehicle controller 302. Then, at least the detection of a forward vehicle relative to the vehicle is performed by the vehicle controller 302. Further, the vehicle controller 302 provides the results of the detection of the forward vehicle to the irradiation controllers 228L and 228R. The irradiation controllers 228L and 228R provide information to the respective controllers on the basis of the data on the forward vehicle detected by the vehicle controller 302 so that optimum light distribution patterns are formed in consideration of the forward vehicle.

Furthermore, the vehicle controller 302 may also acquire information from a steering sensor 310, a vehicle speed sensor 312, and the like that are generally mounted on the vehicle 300. Accordingly, the irradiation controllers 228L and 228R may select a light distribution pattern, which is to be formed, in accordance with the traveling state or traveling posture of the vehicle 300, or easily change the light distribution patterns by changing the direction of the optical axis. For example, if the vehicle controller 302 determines that a vehicle is turning on the basis of the information obtained from the steering sensor 310, each of the irradiation controllers 228L and 228R having received information from the vehicle controller 302 may select the shade plate 24, which forms a light distribution pattern for increasing a field of view in a turning direction, by controlling the rotation of the rotary shade 12. Moreover, the irradiation controller may control the swivel actuator 222 by the swivel controller 234 without changing the rotational state of the rotary shade 12. As a result, the irradiation controller may improve the field of view by making the optical axis of the lamp unit 10 be directed at the turning direction. This control mode may be referred to as a turn sensing mode.

Moreover, when a vehicle travels at a high speed in the nighttime, it is preferable that the front side of the vehicle be illuminated to allow a driver to recognize oncoming vehicles, preceding vehicles, road signs, or message boards as quickly as possible. Accordingly, if the vehicle controller 302 determines that a vehicle travels at a high speed on the basis of the information obtained from the vehicle speed sensor 312, each of the irradiation controllers 228L and 228R may select a shade plate 24, which forms a low beam light distribution pattern corresponding to a highway mode where the shape of the low beam light distribution pattern is partially changed, by controlling the rotation of the rotary shade 12. The same control may be achieved by making the lamp unit 10 be in the backward inclined posture through the control of the leveling actuator 226 that is performed by the leveling controller 236. The auto-leveling control, which is performed by the above-mentioned leveling actuator 226 during the acceleration or deceleration, is a control that maintains the irradiation distance constant. If the height of a cutoff line is actively controlled using this control, it may be possible to perform a control equivalent to the control for selecting a different cutoff line by rotating the rotary shade 12. This control mode may be referred to as a speed sensing mode.

Meanwhile, the optical axis of the lamp unit 10 may be adjusted without using the swivel actuator 222 or the leveling actuator 226. For example, it may be possible to improve visibility in a desired direction by making the lamp unit 10 swivel or be in the forward inclined posture or the backward inclined posture through an aiming control that is performed in real time.

In addition, the vehicle controller 302 may also acquire information about the shape or form of a road, information about the installation of road signs, and the like from a navigation system 314. The vehicle controller previously acquires these kinds of information, so that each of the irradiation controllers 228L and 228R may smoothly form a light distribution pattern suitable for a traveling road by controlling the leveling actuator 226, the swivel actuator 222, the motor 238, and the like. This control mode may be referred to as a navigation sensing mode.

It may be possible to improve the field of view of a driver of the vehicle while suppressing glare directed at drivers or fellow passengers of forward vehicles, such as preceding vehicles or oncoming vehicles, by automatically changing the light distribution pattern of a vehicle in accordance with the traveling state of the vehicle or the circumstances around the vehicle as described above. For example, when the respective automatic forming controls are instructed by the lighting switch 304, the automatic forming controls, which include the above-mentioned various control modes, for forming the light distribution patterns are performed.

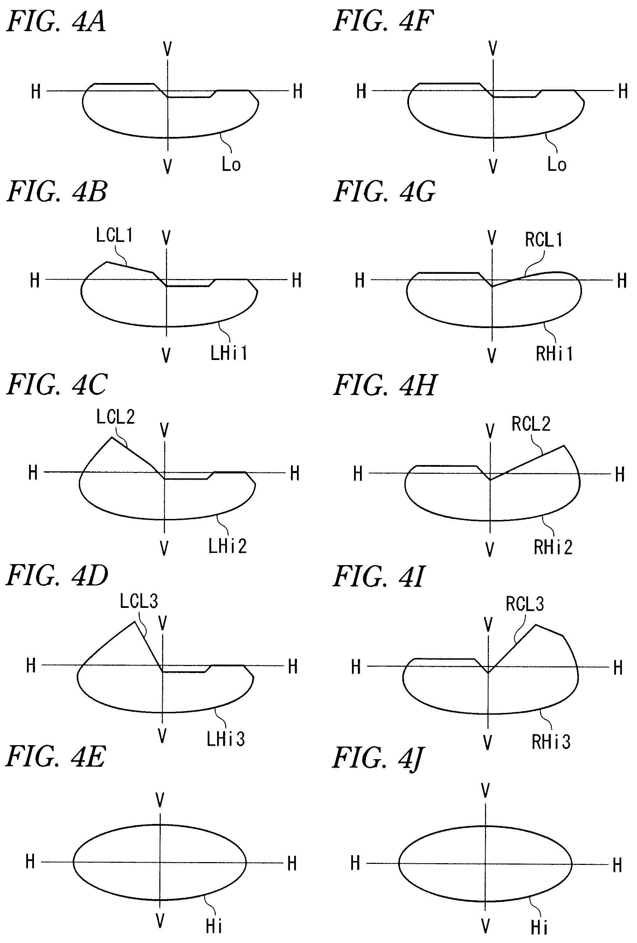

The light distribution patterns, which are formed by the respective headlight units 210L and 210R of the vehicle headlight device 200, will be described below. Figs. 4A to 4E are views showing the shapes of the light distribution patterns formed by the headlight unit 210L and Figs. 4F to 4J are views showing the shapes of the light distribution patterns formed by the headlight unit 210R. Figs. 4A to 4J show light distribution patterns formed at a predetermined position on the front side of the lamp, for example, on a virtual vertical screen that is disposed at a position 25 m ahead of the lamp. Meanwhile, since the projection lens 20 is a plano-convex aspheric lens of which the front surface is a convex surface and the rear surface is a flat surface as shown in Fig. 1, each of other light distribution patterns except for a high beam light distribution pattern becomes an image that is obtained by vertically and horizontally inverting a light source image that includes a portion where light is blocked by the corresponding shade plate 24. Therefore, the shape of a cutoff line of each light distribution pattern corresponds to the shape of an edge of each shade plate 24.

Firstly, each of the lamp units 10 of the headlight units 210L and 210R can form a low beam light distribution pattern Lo as shown in Figs. 4A and 4F. The low beam light distribution pattern Lo is a light distribution pattern that is considered so as not to direct glare at forward vehicles or pedestrians when vehicles or pedestrians keep to the left. The low beam light distribution pattern Lo includes an opposite lane cutoff line that extends in parallel with a line H-H, which is a horizontal line, on the right side of a line V-V (on an opposite lane); a traveling lane cutoff line that extends in parallel with the line H-H at a position higher than the opposite lane cutoff line on the left side of the line V-V (on a traveling lane); and an oblique cutoff line that is formed between the opposite lane cutoff line and the traveling lane cutoff line and connects the opposite lane cutoff line with the traveling lane cutoff line. The opposite lane cutoff line extends in the horizontal direction so that an outside portion of the opposite lane cutoff line is higher than a portion of the opposite lane cutoff line close to the middle of the light distribution pattern and lower than the traveling lane cutoff line. The oblique cutoff line obliquely extends upward from an intersection, which is formed between the opposite lane cutoff line and the line V-V, toward the left side at an inclination angle of 45°.

Further, as shown in Figs. 4E and 4J, each of the lamp units 10 of the headlight units 210L and 210R can form a high beam light distribution pattern Hi. The high beam light distribution pattern Hi is a light distribution pattern that illuminates a front wide range and a distance, and is formed, for example, when glare directed at forward vehicles or pedestrians do not need to be considered.

Furthermore, as described above, the shape of the shade plate 24 of the lamp unit 10 of the headlight unit 210L is different from that of the shade plate of the lamp unit 10 of the headlight unit 210R in the vehicle headlight device 200 according to this embodiment. Accordingly, the lamp units 10 of the headlight units 210L and 210R can form different light distribution patterns.

Specifically, the lamp unit 10 of the headlight unit 210L can form second additional light distribution patterns LHi1, LHi2, and LH3. As shown in Figs. 4B to 4D, each of the second additional light distribution patterns has a second oblique cutoff line where the height of the irradiation region is increased gradually or continuously toward the outside in the vehicle width direction in a region corresponding to the traveling lane above the cutoff line of the low beam light distribution pattern Lo. In this embodiment, the second additional light distribution patterns LHi1 to LHi3 have second oblique cutoff lines LCL1, LCL2, and LCL3 where the heights of the irradiation regions are continuously increased toward the outside in the vehicle width direction, that is, with the distance from the line V-V. Accordingly, each of the second additional light distribution patterns LHi1 to LHi3 includes a substantially fan-shaped irradiation region in a region corresponding to the traveling lane above the cutoff line of the low beam light distribution pattern Lo.

The second additional light distribution patterns LHi1 to LHi3 are special high beam light distribution patterns that block light on a portion of the high beam light distribution pattern Hi corresponding to the opposite lane when vehicles or pedestrians keep to the left and irradiate a portion of the traveling lane with a high beam. The second additional light distribution patterns LHi1 to LHi3 can improve the driver's visibility on a region corresponding to the traveling lane while considering the glare directed at preceding vehicles or pedestrians existing on the traveling lane.

The shapes of the respective second oblique cutoff lines LCL1 to LCL3 of the second additional light distribution patterns LHi1 to LHi3 are different from one another. Specifically, the inclination angles of the second oblique cutoff lines LCL1 to LCL3 are different from one another. The respective inclination angles are increased gradually in order of the second oblique cutoff line LCL1, the second oblique cutoff line LCL2, and the second oblique cutoff line LCL3. Here, the inclination angles of the second oblique cutoff lines LCL1 to LCL3 are, for example, angles formed between the line H-H, which is a horizontal line, and virtual straight lines that connect both ends of the respective second oblique cutoff lines LCL1 to LCL3. Among the ends of the respective second oblique cutoff lines LCL1 to LCL3, ends of the second oblique cutoff lines close to the middle in the vehicle width direction, that is, ends of the second oblique cutoff lines close to the middle of the additional light distribution patterns are, for example, intersections between the oblique cutoff line of the low beam light distribution pattern Lo and the second oblique cutoff lines LCL1 to LCL3. Alternatively, the ends close to the middle in the vehicle width direction may be intersections between the oblique cutoff lines and the traveling lane cutoff line of the low beam light distribution pattern Lo. Among the ends of the respective second oblique cutoff lines LCL1 to LCL3, ends of the second oblique cutoff lines close to the outside in the vehicle width direction, that is, ends of the second oblique cutoff lines close to the outside of the additional light distribution patterns are, for example, intersections between an outline of the additional light distribution pattern and the second oblique cutoff lines LCL1 to LCL3.

The shade plates 24, which form the low beam light distribution pattern Lo and the second additional light distribution patterns LHi1 to LHi3, respectively, are formed on the outer peripheral surface 12b of the rotary shade 12, for example, in the order of the shade plate for the low beam light distribution pattern Lo, the shade plate for the second additional light distribution pattern LHi1, the shade plate for the second additional light distribution pattern LHi2, and the shade plate for the second additional light distribution pattern LHi3. Accordingly, the irradiation controller 228L can change the inclination angles of the second oblique cutoff lines LCL1 to LCL3 gradually by the switching off the low beam light distribution pattern Lo and the second additional light distribution patterns LHi1 to LHi3.

Meanwhile, the lamp unit 10 of the headlight unit 210R can form first additional light distribution patterns RHi1, RHi2, and RHi3 (additional light distribution patterns). As shown in Figs. 4G to 4I, each of the first additional light distribution patterns has a first oblique cutoff line (oblique cutoff line) where the height of the irradiation region is increased gradually or continuously toward the outside in the vehicle width direction in a region corresponding to the opposite lane above the cutoff line of the low beam light distribution pattern Lo. In this embodiment, the first additional light distribution patterns RHi1 to RHi3 have first oblique cutoff lines RCL1, RCL2, and RCL3 where the heights of the irradiation regions are continuously increased toward the outside in the vehicle width direction, that is, with the distance from the line V-V. Accordingly, each of the first additional light distribution patterns RHi1 to RHi3 includes a substantially fan-shaped irradiation region in a region corresponding to the opposite lane above the cutoff line of the low beam light distribution pattern Lo.

The first additional light distribution patterns RHi1 to RHi3 are special high beam light distribution patterns that block light on a portion of the high beam light distribution pattern Hi corresponding to the traveling lane when vehicles or pedestrians keep to the left and irradiate a portion of the opposite lane with a high beam. The first additional light distribution patterns RHi1 to RHi3 can improve the driver's visibility on a region corresponding to the opposite lane while considering the glare directed at preceding vehicles or pedestrians existing on the opposite lane.

The shapes of the respective first oblique cutoff lines RCL1 to RCL3 of the first additional light distribution patterns RHi1 to RHi3 are different from one another. Specifically, the inclination angles of the first oblique cutoff lines RCL1 to RCL3 are different from one another. The respective inclination angles are increased gradually in order of the first oblique cutoff line RCL1, the first oblique cutoff line RCL2, and the first oblique cutoff line RCL3. Here, the inclination angles of the first oblique cutoff lines RCL1 to RCL3 are, for example, angles formed between the line H-H, which is a horizontal line, and virtual straight lines that connect both ends of the respective first oblique cutoff lines RCL1 to RCL3. Among the ends of the respective first oblique cutoff lines RCL1 to RCL3, ends of the first oblique cutoff lines close to the middle of the additional light distribution patterns are, for example, intersections between the line V-V and the first oblique cutoff lines RCL1 to RCL3. Alternatively, the ends close to the middle of the additional light distribution patterns may be intersections between the line V-V and the opposite lane cutoff line of the low beam light distribution pattern Lo. Further, ends of the first oblique cutoff lines close to the outside of the additional light distribution patterns are, for example, intersections between an outline of the additional light distribution pattern and the first oblique cutoff lines RCL1 to RCL3.

The shade plates 24, which form the low beam light distribution pattern Lo and the first additional light distribution patterns RHi1 to RHi3, respectively, are formed on the outer peripheral surface 12b of the rotary shade 12, for example, in order of the shade plate for the low beam light distribution pattern Lo, the shade plate for the first additional light distribution pattern RHi1, the shade plate for the first additional light distribution pattern RHi2, and the shade plate for the first additional light distribution pattern RHi3. Accordingly, the irradiation controller 228R can change the inclination angles of the first oblique cutoff lines RCL1 to RCL3 gradually by the switching off the low beam light distribution pattern Lo and the first additional light distribution patterns RHi1 to RHi3.

Moreover, the vehicle headlight device 200 according to this embodiment can form a so-called split light distribution pattern. The split light distribution pattern is a special high beam light distribution pattern that includes a light blocking region in the middle thereof above the horizontal line and includes high beam regions on both sides of the light blocking region in a horizontal direction. It may be possible to form the split light distribution pattern by the combination of any one of the second additional light distribution patterns LHi1 to LHi3, which are formed by the headlight unit 210L, and any one of the first additional light distribution patterns RHi1 to RHi3 that are formed by the headlight unit 210R. It may be possible to change the ranges of light blocking regions, which are formed by superimposing the second additional light distribution patterns LHi1 to LHi3 and the first additional light distribution patterns RHi1 to RHi3, in the horizontal direction by changing the combination of the second additional light distribution patterns LHi1 to LHi3 and the first additional light distribution patterns RHi1 to RHi3.

Meanwhile, each of the headlight units 210L and 210R may include a shade plate 24 corresponding to a right-traveling low beam light distribution pattern, which is used in a district where vehicles or pedestrians keep to the right according to a traffic regulation.

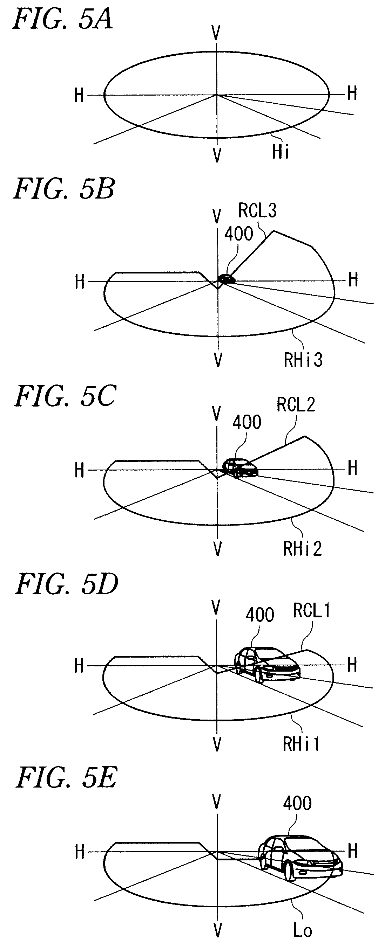

Subsequently, an example of the control of the formation of the light distribution pattern, which is performed by the vehicle headlight device 200 according to this embodiment having the above-mentioned structure, will be described. Figs. 5A to 5E are views illustrating a relationship between a forward vehicle and a light distribution pattern.

In this embodiment, at least the irradiation controller 228R may execute an ADB mode that forms the low beam light distribution pattern Lo, the first additional light distribution patterns RNi1 to RHi3, and the high beam light distribution pattern Hi in accordance with the presence of a forward vehicle by the lamp unit 10 of the headlight unit 210R. Specifically, if the vehicle controller 302 detects the presence of the forward vehicle using the information obtained from the camera 306 while the ADB mode is instructed by the lighting switch 304, the irradiation controller 228R having received the information from the vehicle controller 302 controls the switching of the low beam light distribution pattern Lo and the first additional light distribution patterns RHi1 to RHi3 in accordance with the presence of a forward vehicle.

For example, when a forward vehicle is not detected as shown in Fig. 5A, the irradiation controller 228R forms a high beam light distribution pattern Hi. Further, when a forward vehicle 400 (oncoming vehicle) exists in the distance as shown in Fig. 5B, the irradiation controller 228R forms a first additional light distribution pattern RHi3 having the first oblique cutoff line RCL3. When a forward vehicle 400 approaches a vehicle as shown in Fig. 5C, the irradiation controller 228R switches a light distribution pattern from the first additional light distribution pattern RHi3 to the first additional light distribution pattern RHi2 having the first oblique cutoff line RCL2 of which the inclination angle is smaller than the inclination angle of the first oblique cutoff line RCL3. Furthermore, when the forward vehicle 400 further approaches the vehicle as shown in Fig. 5D, the irradiation controller 228R switches a light distribution pattern from the first additional light distribution pattern RHi2 to the first additional light distribution pattern RHi1 having the first oblique cutoff line RCL1 of which the inclination angle is smaller than the inclination angle of the first oblique cutoff line RCL2. Moreover, when the forward vehicle 400 further approaches the vehicle as shown in Fig. 5E, the irradiation controller 228R forms the low beam light distribution pattern Lo.

As described above, the irradiation controller 228R gradually changes the inclination angles of the first oblique cutoff lines RCL1 to RCL3 in accordance with the presence of a forward vehicle 400. Accordingly, even though the position of the forward vehicle 400 is changed, it may be possible to prevent the presence region of the forward vehicle 400 (for example, the presence region of the head of a driver of the forward vehicle 400) from overlapping with the irradiation regions of the first additional light distribution patterns RHi1 to RHi3. For this reason, it may be possible to improve the driver's visibility on a region corresponding to the opposite lane, particularly, on the shoulder of the opposite lane while preventing glare from being directed at oncoming vehicles. Meanwhile, when the forward vehicle 400 is not detected, the irradiation controller 228L forms the high beam light distribution pattern Hi. When the forward vehicle 400 is detected, the irradiation controller 228L forms the low beam light distribution pattern Lo.

The irradiation controller 228R stores, for example, the information about the shape of each light distribution pattern, that is, the information about the irradiation region in each light distribution pattern in a storage unit (not shown). Accordingly, in the ADB mode, the irradiation controller 228R can select a light distribution pattern, which does not include the position of the forward vehicle 400 in the irradiation region, by comparing the above-mentioned information with the information about the position of the forward vehicle 400 that is obtained from the vehicle controller 302.

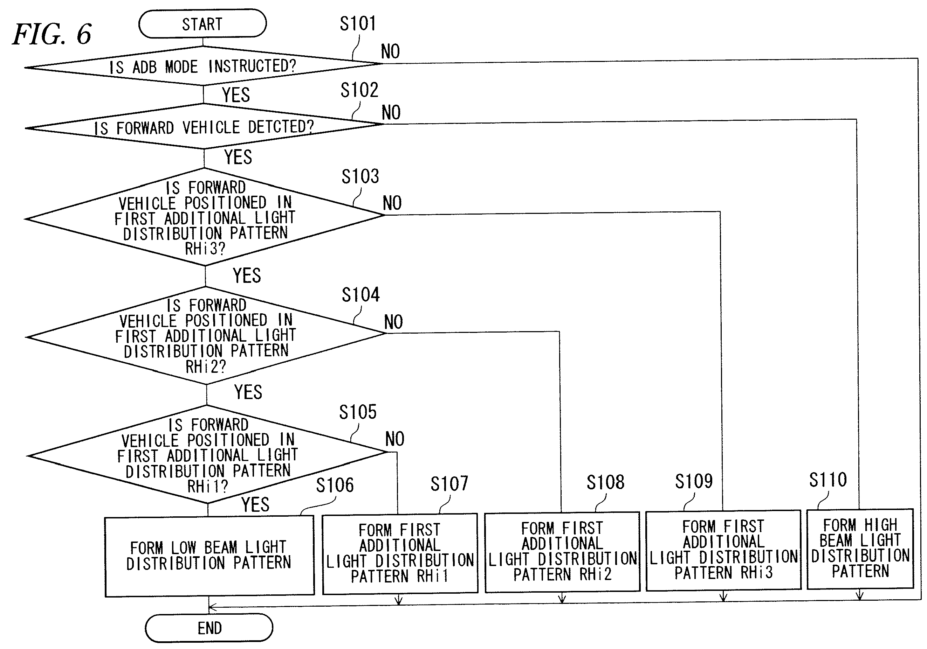

Fig. 6 is a control flow chart of the formation of a light distribution pattern that is performed by the vehicle headlight device according to the first embodiment. The irradiation controller 228R repeats this flow at a predetermined time.

Firstly, on the basis of the information obtained from the vehicle controller 302, the irradiation controller 228R determines whether the execution of the ADB mode is instructed (hereinafter, Step 101 is represented by S101. Other steps are also represented in the same manner). If the execution of the ADB mode is not instructed (No in S101), this routine is ended. If the execution of the ADB mode is instructed (Yes in S101), the irradiation controller 228R executes the ADB mode and determines whether the forward vehicle is detected (S102).

If the forward vehicle is not detected (No in S102), the irradiation controller 228R forms the high beam light distribution pattern Hi (S110) and ends this routine. If the forward vehicle is detected (Yes in S102), the irradiation controller 228R determines whether the forward vehicle is positioned in the irradiation region of the first additional light distribution pattern RHi3 (S103). If the forward vehicle is not positioned in the first additional light distribution pattern RHi3 (No in S103), the irradiation controller 228R forms the first additional light distribution pattern RHi3 (S109) and ends this routine. If the forward vehicle is positioned in the first additional light distribution pattern RHi3 (Yes in S103), the irradiation controller 228R determines whether the forward vehicle is positioned in the irradiation region of the first additional light distribution pattern RHi2 (S104).

If the forward vehicle is not positioned in the first additional light distribution pattern RHi2 (No in S104), the irradiation controller 228R forms the first additional light distribution pattern RHi2 (S108) and ends this routine. If the forward vehicle is positioned in the first additional light distribution pattern RHi2 (Yes in S104), the irradiation controller 228R determines whether the forward vehicle is positioned in the irradiation region of the first additional light distribution pattern RHi1 (S105). If the forward vehicle is not positioned in the first additional light distribution pattern RHi1 (No in S105), the irradiation controller 228R forms the first additional light distribution pattern RHi1 (S107) and ends this routine. If the forward vehicle is positioned in the first additional light distribution pattern RHi1 (Yes in S105), the irradiation controller 228R forms the low beam light distribution pattern Lo (S106) and ends this routine.

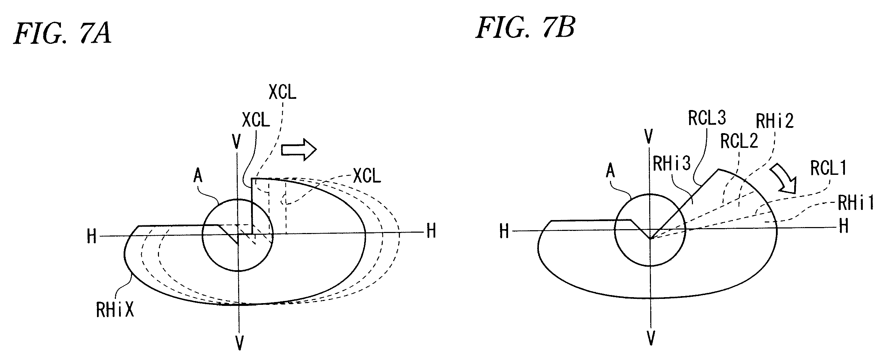

A relationship between the change or displacement of the light distribution pattern and the driver's visual discomfort caused by the change or displacement of the light distribution pattern will be described herein with reference to Fig. 7. Figs. 7A and 7B are views showing the change of the irradiation region that is caused by the switching of a light distribution pattern. Fig. 7A shows the switching of a light distribution pattern in the related art, and Fig. 7B shows the switching of a light distribution pattern of this embodiment.

In general, the center region on the front side of a vehicle becomes a gaze region where a driver driving a vehicle tends to glue one's eyes. Regions A shown in Figs. 7A and 7B are the driver's gaze regions. Since this gaze region A is a region where a driver glues one's eyes, this gaze region is a region where a driver is apt to recognize the change in illuminance. Accordingly, if illuminance is changed in the gaze region A, a driver is apt to feel visual discomfort or inconvenience.

As shown in Fig. 7A, a so-called right-side high light distribution pattern RHiX in the related art includes an irradiation region in a region corresponding to the opposite lane above the cutoff line of the low beam light distribution pattern Lo, and includes a light blocking region in a region corresponding to the traveling lane. Further, the irradiation region and the light blocking region are separated from each other by a substantially vertical cutoff line XCL. Furthermore, a vehicle headlight device in the related art has changed the light blocking region in accordance with the presence of a forward vehicle by moving the right-side high light distribution pattern RHiX toward the opposite lane through the swiveling of a lamp unit. Accordingly, when the right-side high light distribution pattern RHiX has been moved, the vertical cutoff line XCL has moved the gaze region A in the horizontal direction in the vehicle headlight device in the related art.

In contrast, as shown in Fig. 7B, the vehicle headlight device 200 according to this embodiment changes a light blocking region in accordance with a forward vehicle by changing the inclination angles of the first oblique cutoff lines through the switching of the first additional light distribution patterns RHi1 to RHi3, that is, by switching the first oblique cutoff lines RCL1 to RCL3. That is, the vehicle headlight device in the related art has changed a light blocking region by rotationally moving a vertical cutoff line in the horizontal direction. However, the vehicle headlight device 200 according to this embodiment changes a light blocking region by rotationally moving the oblique cutoff line. When the oblique cutoff line is rotationally moved, it may be possible to make the variation of the area of a portion, where the gaze region A and the irradiation region overlap with each other, be smaller as compared to when the vertical cutoff line is moved in a horizontal direction. Accordingly, according to the vehicle headlight device 200 of this embodiment, when a light distribution pattern is changed in accordance with a forward vehicle, it may be possible to make a portion of the gaze region A, where illuminance is changed, be smaller as compared to the vehicle headlight device in the related art. Therefore, it may be possible to reduce a possibility that a driver feels discomfort.

Moreover, a lamp unit is generally designed so that the illuminance of a center region of a light distribution pattern formed by the lamp unit is higher than that of an outer region thereof. For this reason, the variation of the area of the portion, where the gaze region A and a high-illuminance region overlap with each other, is large in the vehicle headlight device in the related art, which moves the right-side high light distribution pattern RHiX by making the lamp unit swivel. In contrast, the vehicle headlight device 200 according to this embodiment changes the irradiation region by switching the first oblique cutoff lines RCL1 to RCL3 without making the lamp unit 10 swivel. In this case, since it may be possible to make the variation of the area of the portion, where the gaze region A and a high-illuminance region overlap with each other, be small, it may be possible to make a portion of the gaze region A, where illuminance is changed, be small. Accordingly, it may be possible to reduce a possibility that a driver feels discomfort.

In addition, a driver tends to generally feel stronger discomfort due to the variation of brightness and darkness in the horizontal direction as compared to those in the vertical direction. For this reason, the driver's discomfort may be reduced in the case of the first additional light distribution patterns RHi1 to RHi3 of this embodiment where the first oblique cutoff lines RCL1 to RCL3 overlap with the gaze region A, as compared to the right-side high light distribution pattern RHiX in the related art where the vertical cutoff line XCL overlaps with the gaze region A.

The vehicle headlight device 200 may perform the control of the switching of a light distribution pattern that is performed by the irradiation controller 228L in accordance with the presence of a forward vehicle on the traveling lane, as well as the control of the switching of a light distribution pattern that is performed by the irradiation controller 228R in accordance with the presence of a forward vehicle on the opposite lane. In this case, the above-mentioned split light distribution pattern is formed. Specifically, the irradiation controller 228L controls the switching of the low beam light distribution pattern Lo, the first additional light distribution patterns RHi1 to RHi3, and the high beam light distribution pattern Hi in accordance with the presence of a forward vehicle. The irradiation controller 228L controls the switching of the low beam light distribution pattern Lo, the second additional light distribution patterns LHi1 to LHi3, and the high beam light distribution pattern Hi in accordance with the presence of a forward vehicle. Accordingly, each of the irradiation controllers 228L and 228R forms the split light distribution pattern that allows the forward vehicle to be in the light blocking region. Further, each of the irradiation controllers 228L and 228R modifies the light blocking region so as to correspond to the position of the moving forward vehicle by switching a light distribution pattern in accordance with the position of the forward vehicle. The above-mentioned control makes it possible to improve the driver's visibility on other regions, particularly, left and right shoulders of a road while preventing the glare from being directed at the forward vehicle.

Meanwhile, the vehicle headlight device 200 may perform only the control of the switching of a light distribution pattern that is performed by the irradiation controller 228L in accordance with the presence of a forward vehicle on the traveling lane. In this case, it may be possible to improve the driver's visibility on the other region, particularly, the left shoulder of a road while preventing the glare from being directed at the forward vehicle.

As described above, in the vehicle headlight device 200 according to this embodiment, the headlight unit 210R can form the first additional light distribution patterns RHi1 to RHi3, which have the first oblique cutoff lines RCL1 to RCL3 where the heights of the irradiation regions are continuously increased toward the outside in the vehicle width direction, in the region corresponding to the opposite lane above the cutoff line of the low beam light distribution pattern Lo. Further, the irradiation controller 228R controls the switching of the formation of the first additional light distribution patterns RHi1 to RHi3 in accordance with the presence of a forward vehicle. Specifically, the inclination angles of the respective first oblique cutoff lines RCL1 to RCL3 of the first additional light distribution patterns RHi1 to RHi3 are different from one another. The irradiation controller 228R gradually changes the inclination angles of the first oblique cutoff lines RCL1 to RCL3 by switching the first additional light distribution patterns RHi1 to RHi3. It may be possible to improve the driver's visibility on a region corresponding to the opposite lane while preventing the glare from being directed at oncoming vehicles, by changing a light distribution pattern in accordance with the presence of a forward vehicle as described above. Further, the first additional light distribution patterns RHi1 to RHi3, which have cutoff lines obliquely extending in the region corresponding to the opposite lane, are switched. Accordingly, it may be possible to make a region of the gaze region A, where illuminance is changed, be smaller as compared to the structure in the related art that makes the right-side high light distribution pattern RHiX having the vertical cutoff line swivel. Furthermore, the entire high-illuminance region of the light distribution pattern is not deviated from the gaze region A. For this reason, it may be possible to make the region of the gaze region A, where illuminance is changed, be small. Therefore, it may be possible to reduce a possibility that a driver feels discomfort when the light distribution pattern is changed in accordance with the presence of a forward vehicle.

Moreover, the vehicle headlight device 200 according to this embodiment includes the rotary shade 12. For this reason, it may be possible to form a plurality of light distribution patterns, which includes the first additional light distribution patterns RHi1 to RHi3, the low beam light distribution pattern Lo, and the high beam light distribution pattern Hi, with a small space. Further, it may be possible to continuously change the shape of the oblique cutoff line with the rotary shade 12.

Furthermore, the headlight unit 210L of the vehicle headlight device 200 according to this embodiment can form the second additional light distribution patterns LHi1 to LHi3. The second additional light distribution patterns have the second oblique cutoff lines LCL1 to LCL3 where the heights of the irradiation regions are continuously increased toward the outside in the vehicle width direction in a region corresponding to the traveling lane above the cutoff line of the low beam light distribution pattern Lo. Moreover, the irradiation controllers 228L and 228R controls the switching of the second additional light distribution patterns LHi1 to LHi3 and the first additional light distribution patterns RHi1 to RHi3 in accordance with the presence of a forward vehicle. For this reason, it may be possible to improve the driver's visibility on the regions corresponding to the opposite lane and the traveling lane while preventing glare from being directed at oncoming vehicles and preceding vehicles. Further, the second additional light distribution patterns LHi1 to LHi3, which have the second oblique cutoff lines LCL1 to LCL3 obliquely extending, are switched even as for the traveling lane. Accordingly, it may be possible to reduce a possibility that a driver feels discomfort, as compared to the structure in the related art that makes the left-side high light distribution pattern having the vertical cutoff line swivel. Meanwhile, the left-side high light distribution pattern is substantially symmetrical with the right-side high light distribution pattern RHiX.

### (Second embodiment)

A vehicle headlight device according to a second embodiment can form a plurality of additional light distribution patterns where the positions of ends of oblique cutoff lines close to the middle in the vehicle width direction are different from one another in the vehicle width direction, and irradiation controllers gradually or continuously change the ends of the oblique cutoff lines close to the middle in the vehicle width direction by switching these additional light distribution patterns. This embodiment will be described below. Meanwhile, the main components of the vehicle headlight device are the same as those of the first embodiment. Accordingly, components similar to those of the first embodiment are denoted by the same reference numerals, a description of the same components will be appropriately omitted, and the same components may be appropriately omitted in the drawing.

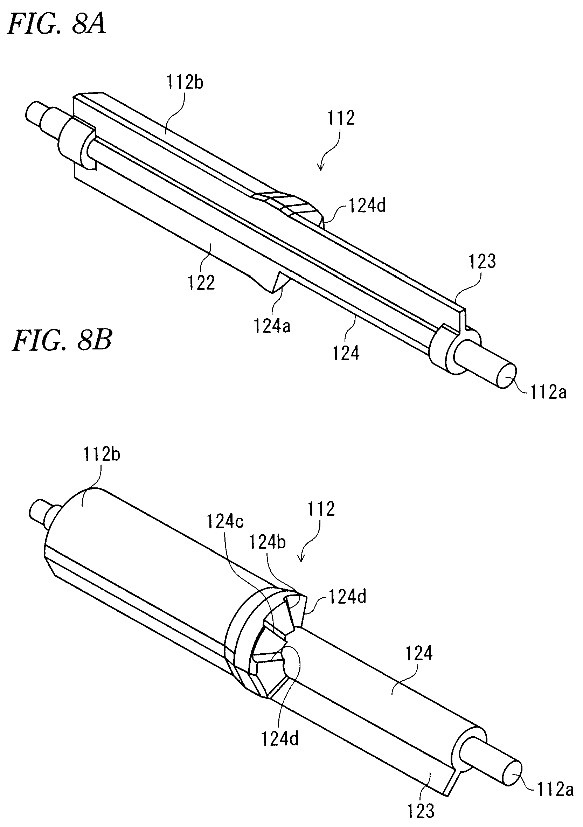

Figs. 8A and 8B are schematic perspective views of a rotary shade of a vehicle headlight device according to a second embodiment of the invention. Figs. 8A and 8B show a rotary shade that is mounted on a lamp unit 10 of a headlight unit 210R. Further, Fig. 8B shows that the rotary shade shown in Fig. 8A is rotated about a rotating shaft by a predetermined angle.

As shown in Figs. 8A and 8B, a rotary shade 112 of a vehicle headlight device 200 according to this embodiment is a cylindrical member that is rotatable about a rotating shaft 112a. The rotary shade 112 includes a cutout portion 122, which is formed by cutting a part of the rotary shade in an axial direction at a portion around the rotating shaft. Further, the rotary shade 112 includes a low beam shade portion 123 that extends in the axial direction and is formed at a portion around the rotating shaft. Furthermore, a partially cutout portion 124, which is formed by cutting a part of the rotary shade in the axial direction, is formed on an outer peripheral surface 112b except for the cutout portion 122 and the low beam shade portion 123. The outer peripheral surface 112b has a shape corresponding to the shape of a cutoff line of a light distribution pattern due to the partially cutout portion 124. That is, a light distribution pattern, which can be formed by the lamp unit 10 of this embodiment, has a cutoff line corresponding to the shape of the outer peripheral surface 112b that appears on the cross-section taken along a rear focal plane of a projection lens 20. A boundary between the partially cutout portion 124 and an uncut portion of the outer peripheral surface 112b is formed in the shape of steps, and obliquely cut edge lines 124a to 124d are formed by the corners of the respective steps.

The rotary shade 112 may move the cutout portion 122, the low beam shade portion 123, or other predetermined portions of the outer peripheral surface 112b to a position, which is positioned on the rear focal plane of the projection lens 20 and on an optical axis O, in accordance with the rotation angle thereof. Accordingly, the lamp unit 10 can form different light distribution patterns by moving each portion onto the optical axis O through the rotation of the rotary shade 112.

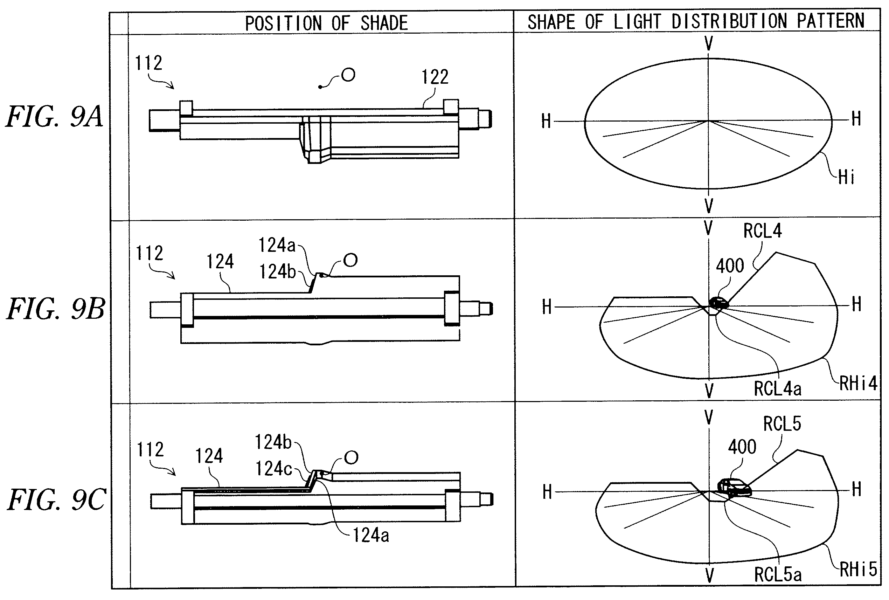

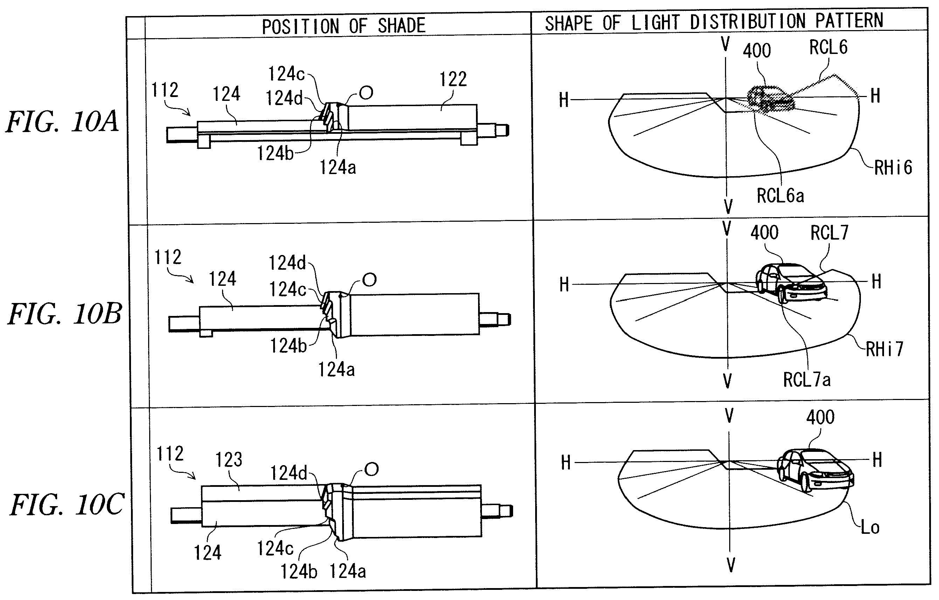

Figs. 9A to 9C and 10A to 10C are views illustrating a relationship between the position of the rotary shade and the shape of a light distribution pattern. Figs. 9A to 9C and 10A to 10C show light distribution patterns formed at a predetermined position on the front side of the lamp, for example, on a virtual vertical screen that is disposed at a position 25 m ahead of the lamp. Further, the rotary shade 112, which is seen from the rear side on the optical axis, is shown in each drawing.

First, when the low beam shade portion 123 of the rotary shade 112 is moved onto the optical axis O, the lamp unit 10 of the headlight unit 210R can form a low beam light distribution pattern Lo as shown in Fig. 10C. Further, when the cutout portion 122 is moved onto the optical axis O, the lamp unit 10 of the headlight unit 210R can form a high beam light distribution pattern Hi as shown in Fig. 9A.

Furthermore, when predetermined portions of the outer peripheral surface 112b are moved onto the optical axis O, the lamp unit 10 of the headlight unit 210R can form first additional light distribution patterns RHi4 to RHi7 having first oblique cutoff lines RCL4 to RCL7 as shown in Figs. 9B, 9C, 10A, and 10B. Each of the first oblique cutoff lines RCL4 to RCL7 is a cutoff line where the height of an irradiation region is continuously increased toward the outside in the vehicle width direction, in a region corresponding to the opposite lane above the cutoff line of the low beam light distribution pattern Lo.

Specifically, when a portion of the outer peripheral surface 112b, which includes the obliquely cut edge line 124a of the partially cutout portion 124, is disposed on the optical axis O, the lamp unit can form the first additional light distribution pattern RHi4 having the first oblique cutoff line RCL4 as shown in Fig. 9B. The first oblique cutoff line RCL4 is formed by the obliquely cut edge line 124a. Meanwhile, while being disposed on the optical axis O and overlapping with the rear focal plane as shown in Fig. 9B, the obliquely cut edge line 124a of the outer peripheral surface 112b can face a part of the obliquely cut edge line 124b that is positioned at a position deviated from the rear focal plane as seen in a direction of an optical axis. That is, a part of the obliquely cut edge line 124b protrudes outward from the cross-sectional region of the rotary shade 112 taken along the rear focal plane as seen in the direction of the optical axis.

Further, when a portion of the outer peripheral surface 112b, which includes the obliquely cut edge line 124b of the partially cutout portion 124, is disposed on the optical axis O, the lamp unit can form the first additional light distribution pattern RHi5 having the first oblique cutoff line RCL5 as shown in Fig. 9C. The first oblique cutoff line RCL5 is formed by the obliquely cut edge line 124b. While being disposed on the optical axis O and overlapping with the rear focal plane as shown in Fig. 9C, the obliquely cut edge line 124b of the outer peripheral surface 112b can face a part of the obliquely cut edge line 124c that is positioned at a position deviated from the rear focal plane as seen in the direction of the optical axis.

Furthermore, when a portion of the outer peripheral surface 112b, which includes the obliquely cut edge line 124c of the partially cutout portion 124, is disposed on the optical axis O, the lamp unit can form the first additional light distribution pattern RHi6 having the first oblique cutoff line RCL6 as shown in Fig. 10A. The first oblique cutoff line RCL6 is formed by the obliquely cut edge line 124c. Meanwhile, while being disposed on the optical axis O and overlapping with the rear focal plane as shown in Fig. 10A, the obliquely cut edge line 124c of the outer peripheral surface 112b can face a part of the obliquely cut edge line 124d that is positioned at a position deviated from the rear focal plane as seen in the direction of the optical axis.

Moreover, when a portion of the outer peripheral surface 112b, which includes the obliquely cut edge line 124d of the partially cutout portion 124, is disposed on the optical axis O, the lamp unit can form the first additional light distribution pattern RHi7 having the first oblique cutoff line RCL7 as shown in Fig. 10B. The first oblique cutoff line RCL7 is formed by the obliquely cut edge line 124d.

The shapes of the respective first oblique cutoff lines RCL4 to RCL7 of the first additional light distribution patterns RHi4 to RHi4 are different from one another. Specifically, the inclination angles of the first oblique cutoff lines RCL4 to RCL7 are different from one another and the positions of ends RCL4a to RCL7a of the cutoff lines close to the middle in the vehicle width direction different from one another in the vehicle width direction. The respective inclination angles are increased gradually in order of the first oblique cutoff line RCL4, the first oblique cutoff line RCL5, the first oblique cutoff line RCL6, and the first oblique cutoff line RCL7. Further, the positions of the respective ends RCL4a to RCL7a of the oblique cutoff lines, which are close to the middle in the vehicle width direction, are positioned gradually toward the outside (the shoulder of the opposite lane) in the vehicle width direction, in order of the first oblique cutoff line RCL4, the first oblique cutoff line RCL5, the first oblique cutoff line RCL6, and the first oblique cutoff line RCL7. Here, the ends of the respective first oblique cutoff lines RCL4 to RCL7, which are close to the middle in the vehicle width direction, are, for example, intersections between the opposite lane cutoff line of the low beam light distribution pattern Lo and the first oblique cutoff lines RCL4 to RCL7. Due to this structure, the irradiation controller 228R can gradually change the inclination angles of the first oblique cutoff lines, and the positions, in the vehicle width direction, of the ends of the oblique cutoff lines, which are close to the middle in the vehicle width direction, by switching the first additional light distribution patterns RHi4 to RHi7.

In this structure, the irradiation controller 228R forms the high beam light distribution pattern Hi as shown in Fig. 9A if the forward vehicle is not detected. Further, as the forward vehicle 400 approaches the vehicle as shown in Figs. 9B to 10C, the irradiation controller 228R switches a light distribution pattern in the order of the first additional light distribution patterns RHi4 to RHi7 and the low beam light distribution pattern Lo. The irradiation controller 228R gradually changes the inclination angles of the first oblique cutoff lines RCL4 to RCL7 and the positions, in the vehicle width direction, of the ends RCL4a to RCL7a, which are close to the middle in the vehicle width direction, by switching the first additional light distribution patterns RHi4 to RHi7 in accordance with the presence of the forward vehicle 400 as described above. Accordingly, it may be possible to prevent the presence region of the forward vehicle 400 from overlapping with the irradiation regions of the first additional light distribution patterns RHi4 to RHi7 even though the position of the forward vehicle 400 is changed. For this reason, it may be possible to improve the visibility to the driver of a region corresponding to the opposite lane, particularly, on the shoulder of the opposite lane, while preventing glare from being directed at oncoming vehicles.

The vehicle headlight device 200 according to this embodiment changes a light blocking region in accordance with a forward vehicle by changing the inclination angles of the first oblique cutoff lines through the switching of the first additional light distribution patterns RHi4 to RHi7. For this reason, when a light distribution pattern is changed in accordance with a forward vehicle, it may be possible to make the area of the gaze region A, where the illuminance is changed, be smaller as compared to the vehicle headlight device in the related art. Therefore, it may be possible to reduce a possibility that a driver feels discomfort. Moreover, in this embodiment, the positions, in the vehicle width direction, of the ends RCL4a to RCL7a of the oblique cutoff lines, which are close to the middle in the vehicle width direction, as well as the inclination angles of the first oblique cutoff lines RCL4 to RCL7 are changed through the switching of the first additional light distribution patterns RHi4 to RHi7. Accordingly, it may be possible to reliably prevent glare from being directed at the forward vehicle 400.

When being disposed on the optical axis O and overlapping with the rear focal plane as described above, the obliquely cut edge lines 124a, 124b, and 124c of the outer peripheral surface 112b can face a part of the obliquely cut edge lines 124b, 124c, and 124d that are placed at positions deviated from the rear focal plane as seen in the direction of the optical axis. As shown in Figs. 9B to 10A, positions where a part of the obliquely cut edge lines 124b to 124d, which are placed at positions deviated from the rear focal plane, protrude are regions that correspond to the outer regions of the first oblique cutoff lines RCL4 to RCL6. Accordingly, for example, if the rotary shade 112 forms a light distribution pattern in the state shown in Fig. 10B, the light emitted from the bulb 14 is blocked by the obliquely cut edge line 124a, so that the first oblique cutoff line RCL4 is formed. Further, the light emitted from the bulb 14 is also blocked by a protruding portion of the obliquely cut edge line 124b, so that the outline of the outer region of the first oblique cutoff line RCL4 becomes blurred. Likewise, in the cases of the first oblique cutoff lines RCL5 and RCL6, light is blocked by the respective obliquely cut edge lines 124c and 124d, so that the outlines of the outsides regions of the first oblique cutoff lines also become blurred.

Accordingly, the clearness of each of the first oblique cutoff lines RCL4 to RCL6 is lower at the outer region of each of the first additional light distribution patterns than at the center region of each of the first additional light distribution patterns RHi4 to RHi6. In other words, the boundaries between the light blocking regions and the irradiation regions of the first additional light distribution patterns RHi4 to RHi6, which are positioned in the region corresponding to the opposite lane. In other words, the first oblique cutoff lines RCL4 to RCL6 have shapes that are clearly visible at the center regions of the first additional light distribution patterns RHi4 to RHi6 and are not clearly visible at the outer regions thereof, when viewed by a driver. When the clarity of each of the oblique cutoff lines is set to be lower at the outer region of each of the additional light distribution patterns than at the center region of each of the additional light distribution patterns as described above, it may be possible to prevent glare from being directed at the forward vehicle at the center region of the additional light distribution pattern and to reduce the driver's discomfort at the outer region of the additional light distribution pattern.

Meanwhile, almost the entire first oblique cutoff line RCL7 overlaps with the forward vehicle 400 as shown in Fig. 10B. For this reason, the first oblique cutoff line RCL7 does not have the shape that makes the outer region be blurred, in consideration of the glare directed at the forward vehicle 400. When the outer region of the first oblique cutoff line RCL7 is to be made blurred after the consideration of the glare directed at the forward vehicle 400, it may be possible to form a dummy edge line, of which a part protrudes as seen in the direction of the optical axis, at the partially cutout portion 124, for example, while the obliquely cut edge line 124d is disposed on the optical axis O and overlaps with the rear focal plane.

The headlight unit 210L includes the rotary shade 112 of which only the shape of the outer peripheral surface 112b is different from that of the rotary shade 112 of the headlight unit 210R. The headlight unit 210L can form a plurality of second additional light distribution patterns of which the inclination angles of the second oblique cutoff lines are different from one another and the positions of the ends of the oblique cutoff lines, which are close to the middle in the vehicle width direction, are different from one another in the vehicle width direction.

Even in this embodiment described above, it may be possible to reduce a possibility that glare is directed at a forward vehicle when a light distribution pattern is changed in accordance with the presence of the forward vehicle. Further, in this embodiment, the positions of the ends RCL4a to RCL7a of the oblique cutoff lines, which are close to the middle in the vehicle width direction, in the vehicle width direction as well as the inclination angles of the first oblique cutoff lines RCL4 to RCL7 are changed through the switching of the first additional light distribution patterns RHi4 to RHi7. Accordingly, it may be possible to reliably prevent glare from being directed at the forward vehicle 400.

Furthermore, in this embodiment, the clarity of each of the first oblique cutoff lines RCL4 to RCL6 is set to be lower at the outer region of each of the first additional light distribution patterns than at the center region of each of the first additional light distribution patterns RHi4 to RHi6. Accordingly, it may be possible to prevent glare from being directed toward the forward vehicle at the center regions of the first additional light distribution patterns RHi4 to RHi6 and to reduce the driver's discomfort at the outer regions of the first additional light distribution patterns RHi4 to RHi6.

Although the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

For example, three or four first and second additional light distribution patterns have been formed in each of the first and second embodiments. However, the numbers of the first and second additional light distribution patterns are not particularly limited. However, if the numbers of the first and second additional light distribution patterns are large, it may be possible to more accurately change a light distribution pattern in accordance with the presence of a forward vehicle. Accordingly, it is preferable that the number of the first and second additional light distribution patterns be large. Moreover, each of the first oblique cutoff lines RCL1 to RCL7 and the second oblique cutoff lines LCL1 to LCL3 may have a shape where the height of the irradiation region gradually changes or is shaped as a curve.

Further, the boundary between the partially cutout portion 124 and the uncut portion of the outer peripheral surface 112b has been formed in the shape of steps in the second embodiment. However, the boundary may be formed in the shape of an inclined surface. In this case, it may be possible to continuously change the inclination angles of the first and second oblique cutoff lines, and to change the positions, in the vehicle width direction, of the ends of the oblique cutoff lines, which are close to the middle in the vehicle width direction. Furthermore, with respect to the rotary shade 12 of the first embodiment, the shade plates 24 could be not formed on the outer peripheral surface 12b of the rotary shade 12 and the shape of the outer peripheral surface 12b may instead be the shape corresponding to the cutoff line of the light distribution pattern, as in the second embodiment. In this case, it may be possible to continuously change the inclination angles of the first and second oblique cutoff lines.

In addition, with respect to the rotary shade 12 of the first embodiment, each of the shade plates 24 may be disposed so as to face a part of adjacent shade plates 24 from a plate portion of the shade plate 24 that is disposed on the optical axis O and corresponds to the outer region of the oblique cutoff line as seen in the direction of the optical axis. In this case, it may be possible to make the clarity of the outer region of the oblique cutoff line be lower than that of the center region.

Moreover, the irradiation controllers 228L and 228R have determined the presence conditions of the forward vehicle in the above-mentioned respective embodiments. However, the vehicle controller 302 may determine the conditions of the forward vehicle and it may be possible to obtain the same advantages as the respective above embodiments. In this case, the irradiation controllers 228L and 228R control the turning-on/off of the bulb 14, the drive of the swivel actuator 222 and the motor 238, or the like on the basis of the instruction of the vehicle controller 302.

## Claims

1. A headlight device for a vehicle, comprising:
a first lamp unit (21 OR) that forms:
a first low beam light distribution pattern (Lo) including a cutoff line; and
a first plurality of types of additional light distribution patterns (RHi1, RHi2, RHi3) each including a first oblique cutoff line (RCL1, RCL2, RCL3),
wherein each of the first oblique cutoff lines (RCL1, RCL2, RCL3) extends upwardly in a vehicle width direction toward the outside in an opposite lane region above the cutoff line of the first low beam light distribution pattern (Lo), and
wherein the inclination angles of the first oblique cutoff lines (RCL1, RCL2, RCL3) are different from one another;
a second lamp unit (210L) that forms:
a second low beam light distribution pattern including a cutoff line; and
a second plurality of types of second additional light distribution patterns (LHi1, LHi2, LHi3) each including a second oblique cutoff line (LCL1, LCL2, LCL3),
wherein each of the second oblique cutoff lines (LCL1, LCL2, LCL3) extends upwardly in the vehicle width direction toward the outside in a travelling lane region above the cutoff line of the second low beam light distribution pattern, and
wherein the inclination angles of the second oblique cutoff lines (LCL1, LCL2, LCL3) are different from one another, and
a controller (228) that controls the switching of the first and/or second additional light distribution patterns (RHi1, RHi2, RHi3; LHi1, LHi2, LHi3) in accordance with a situation of a forward vehicle in front of the vehicle, and **characterized in that** the additional light distribution patterns of the first lamp unit and the second lamp unit remain unchanged in the travelling lane region and the opposite lane region, respectively.

2. The headlight device according to claim 1,
wherein each of the first and second lamp unit comprises:
a light source (14) that irradiates a front region in front of the vehicle with light; and
a rotary shade (12) that blocks a part of the light emitted from the light source and forms at least one of the additional light distribution patterns, wherein the at least one of the additional light distribution patterns is formed based on a rotational position of the rotary shade.

3. The headlight device according to claim 1 or 2,
the controller (228) gradually changes the inclination angle of the first and second oblique cutoff lines, respectively, by switching between the plurality of additional light distribution patterns.

4. The headlight device according to any one of claims 1 to 3,
wherein positions of ends of the first and second oblique cutoff lines are different from one another, respectively, in the vehicle width direction, and
the controller (228) gradually changes the position of the end of the first and second oblique cutoff lines, respectively, in the vehicle width direction by switching between the plurality of additional light distribution patterns.

## Patentansprüche

1. Scheinwerfervorrichtung für ein Fahrzeug, die umfasst:
eine erste Leuchteneinheit (210R), die erzeugt:
ein erstes Abblend-Lichtverteilungsmuster (Lo), das eine erste Hell-Dunkel-Grenzlinie einschließt; und
eine erste Vielzahl von Typen zusätzlicher Lichtverteilungsmuster (RHi1, RHi2, RHi3), die jeweils eine erste schräge Hell-Dunkel-Grenzlinie (RCL1, RCL2, RCL3) einschließen,
wobei jede der ersten schrägen Hell-Dunkel-Grenzlinien (RCL1, RCL2, RCL3) in einer Fahrzeug-Breitenrichtung zur Außenseite in einem Bereich der Gegenfahrbahn oberhalb der Hell-Dunkel-Grenzlinie des ersten Abblend-Lichtverteilungsmusters (Lo) nach oben verläuft, und
die Neigungswinkel der ersten schrägen Hell-Dunkel-Grenzlinien (RCL1, RCL2, RCL3) sich voneinander unterscheiden;
eine zweite Leuchteneinheit (210L), die erzeugt:
ein zweites Abblend-Lichtverteilungsmuster, das eine zweite Hell-Dunkel-Grenzlinie einschließt; und
eine zweite Vielzahl von Typen zweiter zusätzlicher Lichtverteilungsmuster (LHi1, LHi2, LHi3), die jeweils eine zweite schräge Hell-Dunkel-Grenzlinie (LCL1, LCL2, LCL3) einschließen,
wobei jede der zweiten schrägen Hell-Dunkel-Grenzlinien (LCL1, LCL2, LCL3) in einer Fahrzeug-Breitenrichtung zur Außenseite in einem Bereich der Gegenspur oberhalb der Hell-Dunkel-Grenzlinie des zweiten Abblend-Lichtverteilungsmusters nach oben verläuft, und
die Neigungswinkel der zweiten schrägen Hell-Dunkel-Grenzlinien (LCL1, LCL2, LCL3) sich voneinander unterscheiden; und
eine Steuereinrichtung (228), die das Wechseln der ersten und/oder der zweiten zusätzlichen Lichtverteilungsmuster (RHi1, RHi2, RHi3, LHi1, LHi2, LHi3) entsprechend einer Situation eines vorausfahrenden Fahrzeugs vor dem Fahrzeug steuert, und
**dadurch gekennzeichnet, dass**
die zusätzlichen Lichtverteilungsmuster der ersten Leuchteneinheit und der zweiten Leuchteneinheit in dem Bereich der eigenen Fahrbahn bzw. der Gegenfahrbahn unverändert bleiben.

2. Scheinwerfervorrichtung nach Anspruch 1,
wobei die erste und die zweite Leuchteneinheit jeweils umfassen:
eine Lichtquelle (14), die einen vorderen Bereich vor dem Fahrzeug mit Licht beleuchtet; und
eine drehbare Blende (12), die einen Teil des von der Lichtquelle emittierten Lichtes zurückhält und wenigstens eines der zusätzlichen Lichtverteilungsmuster erzeugt, wobei das wenigstens eine der zusätzlichen Lichtverteilungsmuster auf Basis einer Drehposition der drehbaren Blende erzeugt wird.

3. Scheinwerfervorrichtung nach Anspruch 1 oder 2,
wobei die Steuereinrichtung (228) den Neigungswinkel der ersten und der zweiten schrägen Hell-Dunkel-Grenzlinien jeweils allmählich ändert, indem sie zwischen der Vielzahl zusätzlicher Lichtverteilungsmuster umschaltet.

4. Scheinwerfervorrichtung nach einem der Ansprüche 1 bis 3,
wobei Positionen von Enden der ersten und der zweiten schrägen Hell-Dunkel-Grenz-linien sich in der Fahrzeugbreitenrichtung jeweils voneinander unterscheiden, und
die Steuereinrichtung (228) die Position des Endes der ersten und der zweiten schrägen Hell-Dunkel-Grenzlinien in der Fahrzeugbreitenrichtung jeweils allmählich ändert, indem sie zwischen der Vielzahl zusätzlicher Lichtverteilungsmuster umschaltet.

## Revendications

1. Phare pour véhicule, qui comprend :
une première unité de lampe (210R) qui forme :
un premier modèle de répartition de feu de croisement (Lo) qui comprend une ligne de coupure ; et
une première pluralité de types de modèles de répartition de la lumière supplémentaires (RHi1, RHi2, RHi3) qui comprennent chacun une première ligne de coupure oblique (RCL1, RCL2, RCL3),
dans lequel chacune des premières lignes de coupure obliques (RCL1, RCL2, RCL3) s'étend vers le haut dans le sens de la largeur du véhicule, vers l'extérieur dans une zone de voie opposée, au-dessus de la ligne de coupure du premier modèle de répartition de feu de croisement (Lo), et
dans lequel les angles d'inclinaison des premières lignes de coupure obliques (RCL1, RCL2, RCL3) sont différents les uns des autres ;
une seconde unité de lampe (210L) qui forme :
un second modèle de répartition de feu de croisement qui comprend une ligne de coupure ; et
une seconde pluralité de types de seconds modèles de répartition de la lumière supplémentaires (LHil, LHi2, LHi3) qui comprennent chacun une seconde ligne de coupure oblique (LCL1, LCL2, LCL3),
dans lequel chacune des secondes lignes de coupure obliques (LCL1, LCL2, LCL3) s'étend vers le haut dans le sens de la largeur du véhicule, vers l'extérieur dans une zone de voie de circulation, au-dessus de la ligne de coupure du second modèle de répartition de feu de croisement, et
dans lequel les angles d'inclinaison des secondes lignes de coupure obliques (LCL1, LCL2, LCL3) sont différents les uns des autres, et
un contrôleur (228) qui contrôle la commutation du premier et/ou du second modèle(s) de répartition de la lumière supplémentaire(s) (RHi1, RHi2, RHi3 ; LHi1, LHi2, LHi3) selon la situation d'un véhicule opposé face au véhicule, et
**caractérisé en ce que** les modèles de répartition de la lumière supplémentaires de la première unité de lampe et de la seconde unité de lampe restent inchangés dans la zone de voie de circulation et dans la zone de voie opposée, respectivement.

2. Phare pour véhicule selon la revendication 1,
dans lequel chacune de la première et de la seconde unités de lampe comprend :
une source de lumière (14) qui irradie une zone qui se trouve face au véhicule avec de la lumière ; et
un verre coloré rotatif (12) qui bloque une partie de la lumière émise par la source de lumière et qui forme au moins l'un des modèles de répartition de la lumière supplémentaires, l'au moins l'un des modèles de répartition de la lumière supplémentaires étant formé sur la base d'une position de rotation du verre coloré rotatif.

3. Phare selon la revendication 1 ou 2,
le contrôleur (228) modifiant progressivement l'angle d'inclinaison de la première et de la seconde lignes de coupure obliques, respectivement, en basculant entre la pluralité de modèles de répartition de la lumière supplémentaires.

4. Phare selon l'une quelconque des revendications 1 à 3,
dans lequel les positions de la première et de la seconde lignes de coupure obliques sont différentes les unes des autres, respectivement, dans le sens de la largeur du véhicule, et
le contrôleur (228) modifie progressivement la position de l'extrémité de la première et de la seconde lignes de coupure obliques, respectivement, dans le sens de la largeur du véhicule, en basculant entre la pluralité de modèles de répartition de la lumière supplémentaires.
